## Europäisches Patentamt
## European Patent Office
## Office européen des brevets

(19)

(11) Veröffentlichungsnummer: **0 312 527**
**B1**

(12) **EUROPÄISCHE PATENTSCHRIFT**

(45) Veröffentlichungstag der Patentschrift: **30.05.90**

(51) Int. Cl.⁵: **F 16 K 31/06, B 60 H 1/00**

(21) Anmeldenummer: **87902045.1**

(22) Anmeldetag: **19.03.87**

(86) Internationale Anmeldenummer:
**PCT/DE87/00119**

(87) Internationale Veröffentlichungsnummer:
**WO 87/05981 08.10.87 Gazette 87/22**

(54) **MAGNETVENTIL.**

(30) Priorität: **26.03.86 DE 3610122**

(43) Veröffentlichungstag der Anmeldung:
**26.04.89 Patentblatt 89/17**

(45) Bekanntmachung des Hinweises auf die
Patenterteilung:
**30.05.90 Patentblatt 90/22**

(84) Benannte Vertragsstaaten:
**DE FR GB IT**

(56) Entgegenhaltungen:
**DE-A-1 600 717**
**DE-A-3 416 465**
**FR-A-2 398 246**
**US-A-2 431 769**
**US-A-3 529 806**

(73) Patentinhaber: **ROBERT BOSCH GMBH**
**Postfach 50**
**D-7000 Stuttgart 1 (DE)**

(72) Erfinder: **LUNGU, Corneliu**
**Rössbühlstrasse 11**
**D-7582 Bühlertal (DE)**

EP 0 312 527 B1

## Beschreibung

### Stand der Technik

Die Erfindung geht aus von einem Magnetventil nach dem Oberbegriff des Anspruchs 1. Ein bekanntes Magnetventil dieser Art (DE—A—1 600 717) besteht aus einem gleichzeitig den Ventilkörper und den Anker eines sogenannten Auslaufventils bildenden Weicheisenstücks, welches in einem rohrförmigen Ventilgehäuse ohne Einwirkung von Vorspannungsfedern gleitverschieblich angeordnet ist. Über das Ventilgehäuse ist ein eine Magnetspule lagerndes Spulengehäuse geschoben. Der Ventilkörper ist in Strömungsrichtung des von ihm zu steuernden Mediums spitz zulaufend ausgebildet und gelangt entweder unter dem Einfluß der Schwerkraft bzw. der Strömungswirkung des fließenden Mediums von selbst in seine Schließstellung, wobei eine stopfenartige zylindrische Verlängerung am rückwärtigen Teil des Ventilkörpers gegen einen Dichtring gepreßt wird.

Um das Ventil zu öffnen, muß die Magnetspule erregt werden, wodurch der Ventilkörper entgegen der Strömungswirkung von seinem Sitz abgezogen wird, so daß das Ventil seine Offenstellung nur beibehält bei dauererregter Magnetspule. Druckverluste, die im geöffneten Zustand des Ventils über diesem auftreten können, spielen bei dem bekannten Auslaufventil keine Rolle, da dieses zum Portionieren von zähflüssigen Medien in der Nahrungsmittelindustrie bestimmt ist und nur von Bedeutung ist, daß jederzeit der Flüssigkeitsstrom ohne Nachtropfen unterbrochen werden kann. Wegen der Zähflüssigkeit der zu steuernden Medien spielen im übrigen strömungstechnische Bedingungen wie Verwirbelung, laminarer Fluß des Mediums, Luftspaltbildung bei Ansteuerung der Magnetspule durch den gleichzeitig als Anker eingesetzten Ventilkörper oder Schließkörper keine Rolle.

Bekannt ist ferner bei einem federvorgespannten Rückschlagventil (US—A—2 431 769), den Schließkörper in Schließrichtung verjüngend auszubilden, und zwar von einem vorderen inneren Ventilsitz, durch welchen die ankommende Leitung völlig abgesperrt wird, in kegelförmiger Erweiterung bis zu einer Art zweiten Ventilsitz, der jedoch so lange bedeutungslos ist, wie der Schließkörper von allgemein tropfenförmiger Gestalt aufgrund des auf ihn einwirkenden, rückwärtigen Federdrucks die ankommende Leitung abschließt. Um dieses Rückschlagventil schlagartig in seine volle Offenstellung überführen zu können, wirkt die zweite Ventilsitzkonfiguration so, daß bei auch nur geringfügigem Öffnen des ersten Ventilsitzes mit kleinerer Druckfläche der ankommende Druck des Mediums auf eine nunmehr wesentlich größere Druckfläche auftrifft, woraus eine schlagartige Überführung des Rückschlagventils in seine volle Offenstellung erreicht wird. Eine willkürliche Einwirkung auf die Schließkörperposition von außen ist nicht möglich und auch nicht vorgesehen.

Allgemein ist es bei Magnetventilen auch bekannt (DE—A—34 16 465), den hydraulischen Teil mit Einströmöffnungen und Ausströmöffnungen, ringförmigem Ventilsitz und einem Schließglied dadurch räumlich vom Magnetteil zu trennen, daß dieses oberhalb des Hydraulikteils angeordnet ist und der von der Ringspule je nach Ansteuerung eingezogene Magnetanker den Schließkörper über eine Ventilstange betätigt. Bei diesem bekannten Ventil ist daher die Strömungsrichtung des vom Ventil geschalteten Mediums, die beispielsweise die Kühlflüssigkeit einer Brennkraftmaschine sein kann, doppelt umgelenkt, da das Ventilglied mit seinem Schließkörper in axialer Schichtung mit dem Anker des Magnetteils angeordnet ist und das Flüssigkeitsmedium nach Passieren von Ventilsitz und Schließkörper in dessen Offenstellung nicht auch den Magnetteil mit Anker durchfließen kann. Andererseits muß aber bei bekannten, beispielsweise für eine Heizeinrichtung zum Erwärmen des Fahgastraums eines Kraftfahrzeugs mit einem flüssigkeitsgekühlten Verbrennungsmotor geeigneten Ventilen dafür Sorge getragen werden, daß auch oberhalb des hydraulischen Bereichs, also im Magnetteil, keine zu Korrosion führenden Lufteinflüsse auftreten; daher ist die Ventilstange durchbohrt und bildet einen Kanal für das Kühlmedium.

Solche bekannten Magnetventile, die in Zuordnung zu einer Heizeinrichtung ein Kühlmedium schalten, sind daher von erheblich kompliziertem Aufbau und benötigen eine Vielzahl von Teileelementen oder Komponenten, wobei wegen der Kraftübertragung über die Ventilstange zum Schalten des Ventils auch eine erhebliche magnetische Durchflutung und ein entsprechend großer Energieaufwand zur Ansteuerung der Magnetspule erforderlich sind.

Der Erfindung liegt daher die Aufgabe zugrunde, das eingangs genannte federlose Magnetventil so zu verbessern und in seiner Funktion zu modifizieren, daß unter Einbeziehung der Strömungsverhältnisse am Ventilkörper ein wirkungsvolles Umschaltverhalten mit geringem Energieaufwand und geringen Druckverlusten über dem Ventil resultiert, so daß dieses vorzugsweise als Heißwasser-Taktventil für Heizeinrichtungen bei Kraftfahrzeugen (wasserseitig gestellte Klimaanlagen) eingesetzt werden kann.

### Vorteile der Erfindung

Das erfindungsgemäße Magnetventil löst diese Aufgabe mit den kennzeichnenden Merkmalen des Anspruchs 1 und hat den Vorteil, daß durch den einfachen koaxialen Aufbau mit dem zugrunde liegenden federlosen Funktionsprinzip magnetische und strömungstechnische Funktionen mit den gleichen Elementen verwirklicht und in synergistischer Weise miteinander kombiniert werden können.

Durch die drastische mechanische Vereinfachung im Aufbau ergibt sich neben einer erheblichen Kostenreduzierung auch die Eignung zur automatischen Montage.

Das von dem Magnetventil geschaltete Medium, welches ein Gas oder eine Flüssigkeit sein kann, wird in der Strömungsrichtung nicht umgeleitet, wobei der gleichzeitig als Schließkörper und Magnetanker wirkende, einzige bewegliche Teil des erfindungsgemäßen Magnetventils so strömungsgünstig gestaltet ist, daß der größte Teil des ohnehin sehr geringen Druckverlusts (insgesamt über das Ventil gesehen lediglich ca. 0,2 bar) nach Passieren des Ventilsitzbereichs praktisch ohne Wirbelverluste als Druckgewinn rückgewonnen werden kann, mit anderen Worten, die höhere Strömungsgeschwindigkeit im Sitzbereich, die als kinetische Energie der Flüssigkeit auftritt, wird hinter dem Ventil als Druckgewinn wieder realisiert.

Vorteilhaft ist ferner, daß eine einwandfreie Funktion auch dann noch gegeben ist, wenn, speziell auf den Anwendungsbereich bei Klimaanlagen für Kraftfahrzeuge u.dgl. gerichtet, mit einem beispielsweise durch Gießereisand oder sonstige, auch faserige Mittel verunreinigtem Kühlgemisch gerechnet werden muß.

Da das erfindungsgemäße Magnetventil wesentlich kürzer baut als bekannte Ventile dieser Art, weil auf die bisherige axiale Schichtung von Magnetteil und Hydraulikteil verzichtet werden konnte, ergibt sich nicht nur eine wesentliche Gewichtsreduzierung (in etwa nur die Hälfte des Gewichts bekannter Magnetventile), sondern auch eine entscheidende Verminderung der zur Durchführung der Schaltfunktionen erforderlichen elektrischen Stromaufnahme (die theoretische Schließkraft ist um ca. das 2,5-fache geringer als bei konventioneller Bauweise).

Durch eine besonders strömungsgünstige Form des Magnetankers/Schließkörpers, der ohne Vorspannung einer korrosionsgefährdeten Feder innerhalb vorgegebener Abmessungen in seiner Lagerung frei beweglich und verschiebbar ist, ergeben sich günstige Fließverhältnisse für das strömende Medium, gleichzeitig aber auch ein kraftvoller magnetischer Kreis, der sich bei Ansteuerung der Magnetspule durch Verringerung des Luftspalts schließt, wobei hierdurch gleichzeitig der Schließkörper auf seinen Sitz gezogen wird.

Besonders vorteilhaft ist die Möglichkeit, ein solches Magnetventil ohne bauliche Umgestaltung sofort als Rückschlagventil einsetzen zu können, so daß für den gleichen Strömungskreislauf das erfindungsgemäße Magnetventil in der einen Strömungsrichtung den Fluß des zu schaltenden Mediums je nach Ansteuerung entweder freigibt oder sperrt und in der anderen Strömungsrichtung selbsttätig schließt.

Durch die in den Unteransprüchen aufgeführten Maßnahmen sind vorteilhafte Weiterbildungen und Verbesserungen des im Hauptanspruch angegebenen Magnetventils möglich.

## Zeichnung

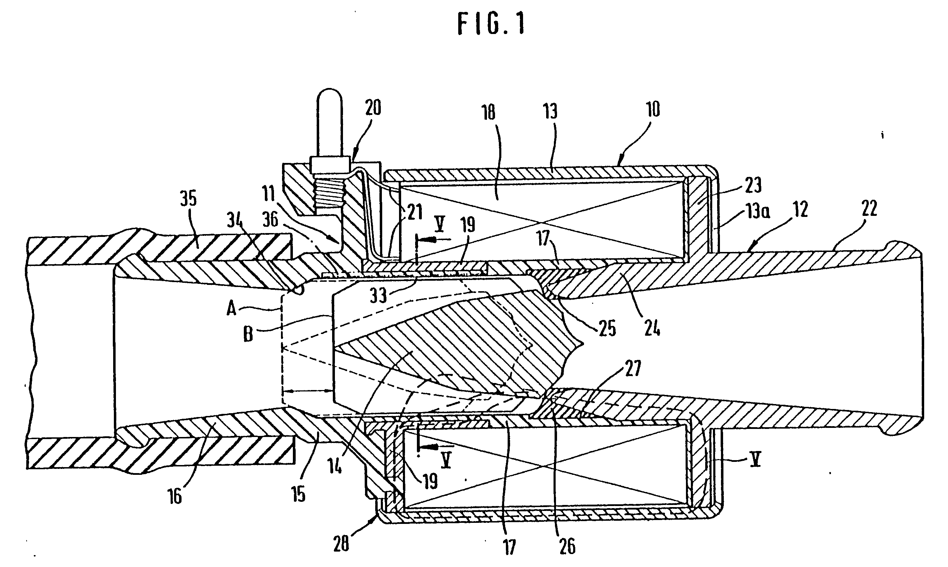

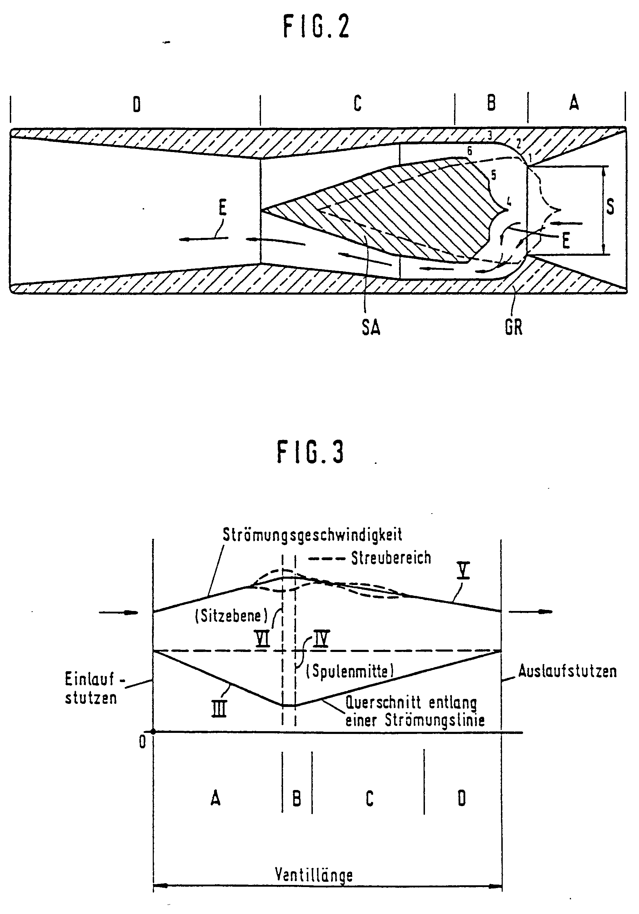

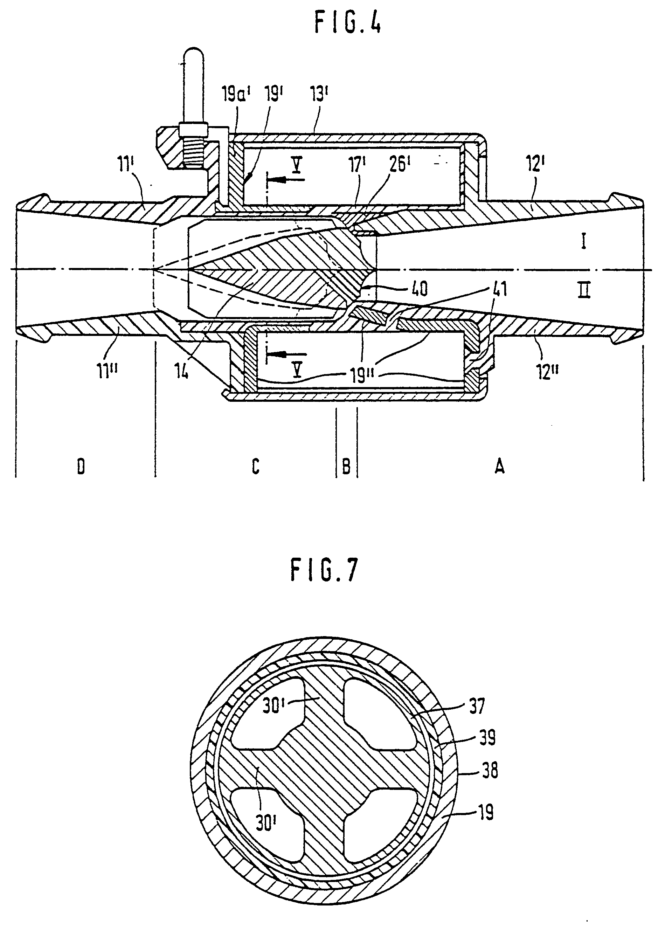

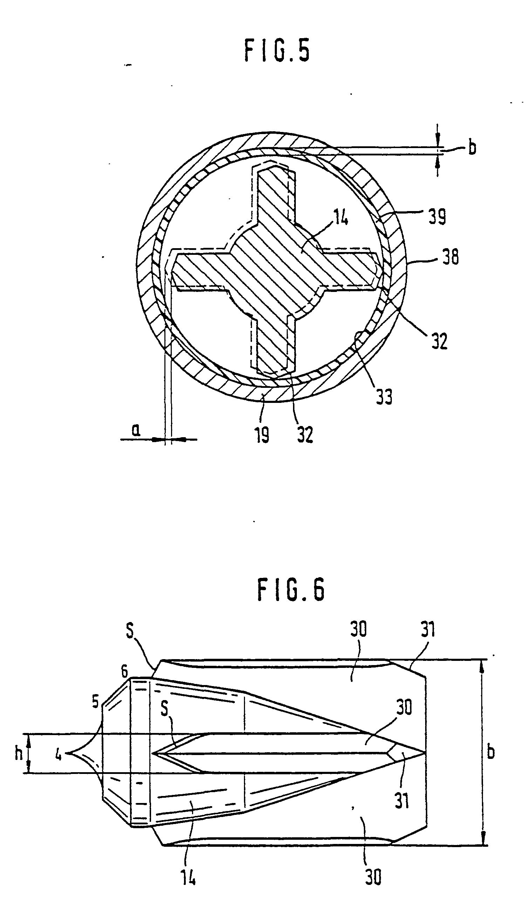

Ausführungsbeispiele der Erfindung sind in der Zeichnung dergestellt und werden in der nachfolgenden Beschreibung näher erläutert. Es zeigen Fig. 1 in einer stark vergrößerten Längsschnittdarstellung schematisch den Grundaufbau eines bevorzugten Ausführungsbeispiels und Fig. 2 in Verbindung mit Fig. 3 ein schematisiertes Modell, mit welchem sich grundlegende strömungstechnische Erkenntnisse in der Diagrammform der Fig. 3 erläutern lassen; Fig. 4 zeigt zwei mögliche Ausführungsformen I und II eines Magnetventils, zusammengefaßt in einer Längsschnittdarstellung, Fig. 5 einen Schnitt längs der Linie V—V der Fig. 4 in vergrößerter Darstellung, Fig. 6 eine Seitenansicht des Schließkörpers/Magnetankers, ebenfalls stark vergrößert und Fig. 7 eine alternative Ausführungsform des Schließkörpers im Bereich seiner Flügel.

## Beschreibung der Ausführungsbeispiele

Der Grundgedanke der Erfindung besteht darin, auf kleinem Raum und konzentrische zueinander magnetische und strömungstechnische Funktionen mit den gleichen Elementen zu verwirklichen, wobei der hydraulisch oder gegebenenfalls auch pneumatisch wirksame Schließkörper gleichzeitig den Magnetanker für die ihn umgebende Magnetspule darstellt und der Spulenkörper neben der Aufnahme des Magnetjochs oder als Teil desselben Lagerfunktionen auch für den Strömungskörper übernimmt, und ferner unmittelbar beidseitig in äußere Anschlußteile übergeht, beispielsweise zum Aufschieben von Schlauchverbindungen o.dgl. Die natürliche Größe des erfindungsgemäßen Magnetventils, daher auch dessen kompakte Bauart, leichtes Gewicht und niedriger Energieaufwand für die Schaltvorgänge kann man sich anhand der Darstellung der Fig. 3 vorstellen, die ein mögliches Ausführungsbeispiel des Magnetventils etwa doppelt so groß wie in Wirklichkeit zeigt.

Entsprechend Fig. 1 ist das Magnetventil 10 aus vier Hauptteilen aufgebaut, nämlich einem ersten Trägerteil 11, einem diesem gegenüberliegenden zweiten Trägerteil 12, einem im wesentlichen die Magnetspule umgebenden metallischen Gehäusemantel 13, der auch den magnetischen Rückschluß bildet, und dem Schließkörper 14, der gleichzeitig das unter dem Einfluß der auftretenden Magnetkräfte verschiebbare Teil, also den Magnetanker bildet.

Das erste Trägerteil besteht aus einem Formteil 15, welches in der Zeichenebene links einstückig in den Ausström-Anschluß stutzen 16 übergeht, daher kann dieses Trägerteil 11 insgesamt auch als Auslaufstück bezeichnet werden. Das Trägerteil bildet vorzugsweise einstückig in einer weit in der Zeichenebene nach rechts reichenden Verlängerung von Spulenkörper 17, der eine allgemeine Zwirnrollenform aufweist und die Spule 18 aufnimmt. Im Bereich des Spulenkörpers und in diesen eingebettet ist ein Jochteil 19 aus magnetisch leitendem Material entsprechender Permeabilität, ferner sind bei 20 noch angedeutet elektrische Steckanschlüsse, die im Material des Auslaufstücks verankert, beispielsweise eingeschraubt oder sofort bei dessen Herstellung mit umgossen sind und zu denen die elektrischen Anschlüsse 21 der Spule geführt sind.

Das zweite Trägerteil 12 oder Einlaufstück besteht, wie in Fig. 1 gezeigt, entweder selbst aus einem geeigneten metallischen Gußteil oder nimmt eingebettet Jochteile auf, worauf weiter unten noch eingegangen wird. Jedenfalls bildet das Einlaufstück ebenfalls einstückig den Einströmanschlußstutzen 22, eine an die zugewandte Ringwandung des Spulenkörpers 17 anliegende, einen Teil des magnetischen Rückschlußkreises bildende Stirnwandung 23 sowie mit einem nach innen verjüngt vorspringenden Rohrteil 24 den Sitzbereich 25 für das Magnetventil. Dieser Sitzbereich 25 ist bei dem in Fig. 1 dargestellten Ausführungsbeispiel vorzugsweise gebildet aus einem anvulkanisiertem elastomeren Ringmaterial 26 der in Fig. 1 dargestellten Form, so daß sich eine gute Abdichtwirkung in Verbindung mit dem Dichtkörper 14 ergibt.

Dieser Dichtkörper 14 ist, in Fig. 1 in zwei Positionen dargestellt, und zwar gestrichelt in der Offenstellung A des Ventils und in durchgezogener Linienführung in Schließposition B.

Nach Einschieben des in der Zeichenebene rechtsseitigen Einlaufstücks in die abgestufte Bohrung 27 des Auslaufstücks vervollständigt sich der Aufbau des fertigen Ventils durch den übergeschobenen Gehäusemantel 13, der mit einer nach innen vorspringenden Ringschulter 13a an der Ringwandung 23 des Einlaufstücks anliegen kann und einen festen Sitz dadurch findet, daß er auf der anderen Seite, wie bei 28 angedeutet, umgebördelt ist.

Dies ist der grundsätzliche Aufbau des erfindungsgemäßen Ventils und bevor im folgenden auf praktische Realisierungsmöglichkeiten und Funktionen eingegangen wird, sollen anhand der Darstellungen der Fig. 2 und 3 zunächst durch Versuche (empirisch) gewonnene Erkenntnisse in strömungstechnischer und elektromagnetischer Hinsicht, insbesondere auch Sitz- und Schließkörperform und -verhalten erläutert werden. Eine visuelle Analyse des Strömungsverhältnisses an einem schematisierten, in Fig. 2 dargestellten Ventilmodell aus durchsichtigem Kunststoff (Plexiglas) ergibt einen Querschnittsverlauf vom Einlaufstutzen zum Auslaufstutzen wie in Fig. 3 gezeigt. Das der Untersuchung zugrundegelegte Ventilmodell enthält einen grob tropfenförmigen Schließkörper/Anker SA, dessen Form allgemein auch luftschiffähnlich oder bombenförmig bezeichnet werden kann, der beispielsweise mit Hilfe einer Stange in Strömungsrichtung verstellbar angeordnet wird. Der Strömungskörper SA befindet sich achsmittig in einem Plexiglasrohr GR, dessen Form unter Berücksichtigung des Schließkörperquerschnitts (in offener Stellung des Ventils) so gewählt ist, daß der Strömungsquerschnitt einer Stromlinie im Bereich des Schließkörpers und nach diesem den in Figur 3 gezeigten Verlauf III annimmt.

Die folgenden Ausführungen enthalten zum Teil auch numerische Werte, die, wie es sich versteht, die Erfindung nicht einschränken, sondern lediglich aus Gründen eines besseren Verständnisses und zur Klarstellung angegeben sind.

Die in Figur 2 erkennbare Querschnittsführung (vergl. Pfeile E) ist besonders strömungsgünstig und erreicht bei einem Sitzdurchmesser von 8 mm (0,5 cm²) ungefähr gleiche Druckverluste wie bei einem Sitzdurchmesser von 12,5 mm (1,23 cm²) in konventioneller Bauweise. Durch Verschieben des Schließkörpers in die gestrichelt gezeichnete Stellung der Figur 2 wird eine zuverlässige Schließung des Ventils erreicht, wobei die theoretisch ermittelten Schließkräfte etwa 2,45 mal kleiner sind als bei konventioneller Bauweise. Die Versuche wurden mit Wasser durchgeführt unter praxisgerechten Bedingungen, wobei eine Wassermenge von ca. 2,000 l/h angestrebt wurde, was zu einem Druckverlust von legiglich ca. 0,2 bar über dem Ventil führte. Die Besonderheiten der Strömungsführung werden anhand der in Figur 2 getroffenen Unterteilung der Ventillänge in vier Abschnitte A, B, C und D erläutert.

Der Einlaufstutzen-Abschnitt A (Beschleunigungsstrecke) bildet trichterähnlich einen Öffnungswinkel (von vorzugsweise <35°) und ist der Übergang zwischen dem angeschlossenen Schlauchquerschnitt und dem Sitzdurchmesser S des Ventils. Dieser Bereich würde für sich gesehen allein einen Druckverlust von ca. 0,5 bar verursachen.

Der Abschnitt B bildet den Flüssigkeitsstrahlspalt sowie den Schließ- bzw. Umlenkungsbereich für den Stromlinienverlauf im Sitzbereich des Ventils.

Hierzu ist zu berücksichtigen, daß die Stelle 1 der Sitzbereich ist und daher eine dem Schließkörper angepaßte Form aufzuweisen hat. In gleicher Weise läßt daher auch die Strecke 2—3 auf der Ventilrohr-Innenseite nur solche Gestaltungsmöglichkeiten zu, daß sie nicht störend auf die Schließkörperform einwirken.

Die Form des Schließkörpers in dem Bereich 4—5—6 (Fig. 2) hat einen wesentlichen Einfluß auf Druckverlust, Schließkraft am Anfang des Hubes und Dichtigkeit des Ventils. Dabei wird die Zone 4—5 frontal von dem Flüssigkeitsstrahl angeströmt und spaltet disen so, daß eine Strömungsführung möglichst entlang der Strecke 1—2—3 durch den sogenannten Coanda-Effekt erfolgt. Dadurch hebt der Flüssigkeitsstrahl am Umfangspunkt 5 des Schließkörpes SA von dessen Oberfläche ab, so daß in dem ringförmigen Bereich 5—6 eine relative Unterdurckwirkung entsteht, die einen wichtigen Beitrag zur Reduzierung der Anfangsschließkräfte zu leisten in der Lage ist.

Im Punkt 6 weist die Strömung eine Geschwindigkeit auf, die ungefähr gleichgroß ist wie die im Sitzbereich.

Im ganzen Abschnitt B erfolgt eine doppelte Umlenkung (zwischen den Strecken 4—5 bzw. 1—2—3) des Flüssigkeitsstrahls bei hoher Geschwindigkeit; daher sind Dichte, dynamische Viskosität und Kavitationsneigung der Flüssigkeit, gegebenenfalls auch des alternativen Mediumsgas, zu berücksichtigen. Eine entsprechende Optimierung dieser Bereiche 1—2—3 sowie 4—5—6 an die Gegebenheiten des strömenden Mediums, auch unter Berücksichtigung von dessen Kompressibilität und Verunreinigungszustand ergänzend zu Zähigkeit und Dichte ist daher sinnvoll.

Unter diesen Umständen sieht die Erfindung vor, unter Umständen mit auswechselbaren Schließkörpern/Magnetankern zu arbeiten, je nach dem zu schaltenden Medium, so daß Änderungen möglich sich um Umfang 5, am Radius der Strecke 4—5, an der Schräge der Zonen 5—6 (alle Körper sind rotations-symmetrisch), um unter den jeweiligen Umständen an das Medium amgepaßte Dichtigkeitsbedingungen und einwandfreies Schaltverhalten unter dem Einfluß des Magnetfeldes sicherzustellen.

In den Abschnitten C und D muß sich die Strömung, soweit möglich ohne Wirbelverluste, bis auf die vom Durchmesser der anschließenden Leitung vorgegebene Geschwindigkeit verlängsamen. Dabei wird die kinetische Energie der Flüssigkeit in einen Druckgewinn rückgewandelt, so daß der gesamte Druckverlust des Ventils nur lediglich 0,2 bar beträgt.

Ergänzend fallen dem Abschnitt C, der in der Schemadarstellung der Fig. 2 als sich durchgehend bis zum Übergang auf den Abschnitt D verjüngend ausgebildet ist, noch Aufgaben einer mechanischen Führung des Schließkörpers bzw. der Magnetflußübertragung zu, worauf weiter unten noch eingegangen wird.

Vom Gesichtspunkt der magnetischen Funktion sind die sich gegenüberliegenden Ringflächenbereiche 1—2 bzw. 5—6 als sich anziehende Pole eines Luftspaltes ausgebildet, wobei aus den elektromagnetischen Wirkungsgrad betreffenden Überlegungen dieser Luftspalt sich etwa in der Mitte der Spule befindet, wie bei IV in Fig. 3 angedeutet. Die Schließung des magnetischen Kreises auf kürzesten Weg erfolgt dann längs der gestrichelten Linienführung V in Fig. 1.

Der Abschnitt A wird bei dem praktischen Ausführungsbeispiel entsprechend Fig. 1 oder Fig. 3 gebildet von dem Einlaufstück (zweites Trägerteil 12 mit Schlauchstutzen), wobei an der linken Seite dieses Einlaufstückes die aus einem geeigneten Gummi oder Elastomer bestehende Ventilsitzdichtung angeordnet, vorzugsweise aufvulkanisiert ist, in Fig. 1 mit 26 bezeichnet ist und die entsprechend der Zone 1—2—3 geformt ist und gleichzeitig als Abdichtung gegenüber dem Spulenkörper 17 wirkt. Das Einlaufstück ist, abgesehen von der aufvulkanisierten Elastomerdichtung 26, vorzugsweise einstückig ausgebildet. Die restlichen magnetischen und strömungstechnischen Formerfordernisse, wie sie sich aufgrund dieser Modellbetrachtung ergeben, werden dann erfüllt von dem Auslaufstück als erstem Trägerteil 11 und dem Schließkörper/Magnetanker 14. Die sich aufgrund der Tropfenform und der übrigen Modellgestaltung der Fig. 2 ergebende Strömungsgeschwindigkeit ist im Diagramm der Fig. 3 bei V angegeben, mit gestrichelten Kurvenverläufen, die für den angrenzenden Abschnitt A, den Abschnitt B und C einen Streubereich kennzeichnen. Die Sitzebene des Schließkörpers verläuft in Fig. 3 bei VI.

Um die dynamischen Bewegungen des Schließkörpers/Magnetankers, seine Führung und den magnetischen Rückschluß zu gewährleisten, und zwar bei grundsätzlicher Beibehaltung der Tropfenform, sind dem Schließkörper/Magnetanker in seiner praxisgerechten Ausführungsform so, wie er in den Fig. 1, 3 und 7 dargestellt ist, einstückig Führungsmittel zugeordnet, die im folgenden als Führungs-Magnetleitflügel 30 bezeichnet werden, am besten der Darstellung der Fig. 6 und dem Querschnitt der Fig. 5 entnommen werden können und in etwa den Leitflügel einer Rakete ähneln. Diese Führungs-Magnetleitflügel 30 sind gleichmäßig um die Schließkörper-Außenfläche in gleichem Winkelabstand, vorzugsweise um 90°, verteilt, so daß sich insgesamt vier Flügel ergeben.

Diese Flügel sind in vorteilhafter Ausgestaltung so ausgebildet, daß sie in vorgegebenen, vorzugsweise geringem Abstand hinter der Schrägen-Ebene-Ringfläche 5—6 des Schließkörpers/Magnetankers 14 mit einer Schräge S beginnen, so daß beispielsweise in dem zu schaltenden Medium enthaltende faserförmige Verunreinigungen an diesem Flügel nicht hängenbleiben. In Strömungsrichtung, also in der Zeichenebene der Fig. 6 nach rechts setzen sich die Flügel dann geradlinig fort, bilden also (bei Drehung des Schließkörpers 14) als Einhüllende eine Zylinderform und sind an ihrem hinteren Ende bei 31 wieder abgeschrägt, bevor sie senkrecht zum Mittelpunkt verlaufen. Durch die Schrägen S und 31 im Einlauf- bzw. Auslaufbereich werden zusätzliche Druckverluste gering gehalten. Die Stärker oder Dicke h der Flügel (siehe Fig. 6) muß aus magnetischen Überlegungen jedoch so ausreichend sein, daß sich über die Flügel ein sicherer magnetischer Fluß ohne zu große Widerstände ergeben kann.

Ferner ist das Flügelprofil angrenzend zur noch zu erläuternden Innenwandung des Führungsrohrs des Hilfskörpers 14 (hauptsächlich im Abschnitt C) dachförmig ausgebildet, wie am besten die Darstellung der Fig. 5 bei 32 im Querschnitt zeigt, so daß auch sichergestellt ist, daß im Fließmedium enthaltende Verunreinigungen, Sandkörper beispielsweise, praktisch zwangsläufig aus dem Spalt zwischen den Flügeln (der bei Dachform lediglich noch linienförmig ist) und dem Führungsrohr austreten.

Dementsprechend ist im Bereich des Führungsrohrs (Abschnitt C) für den Schließkörper/Magnetanker 14, wie dieser Bereich im folgenden benannt oder mit 33 bezeichnet werden soll, der zylindrischen Außenform der Flügel (als Einhüllende) eine zylindrische Innenwandung des Führungsrohrs zugeordnet, die von der Spulenkörper-Innenwand gebildet ist (als Teil des Auslaufstücks). Dieser zylindrische Führungsrohrbereich setzt sich in Fließrichtung dann mit einer trichterförmigen Zone 34 fort, dessen Schräge beispielsweise bei ca. 25° liegen kann. Auf diese Schräge stützen sich am Ende des Öffnungshubs die entsprechend gleichwinklig abgeschrägten Enden 31 der Führungsflügel 30 ab. Daher erfolgt der Aufprall des Schließkörpers/Magnetankers 14 beim Öffnen des Ventils nicht frontal, sondern in diesem Bereich 31/34 schräg, was durch eine momentane radiale Ausdehnung des zugeordneten Kunststoffrohrs in diesem Bereich aufgefangen wird. Berücksichtigt man ferner, daß hier am Ende des Spulenkörpers gleichzeitig der Schlauchanschlußstutzen, vom Gummi des weiterführenden Schlauches 35 ummantelt, angeordnet ist, dann wird diese Aufprallenergie des sich öffnenden Ventils nahezu vollständig vernichtet (gute Geräuschdämpfung).

Trotz der Neigung zur Unsymmetrie der magnetischen Anziehungskräfte im Sitzbereich und trotz des vom Schließkörper/Magnetanker 14 funktionsbedingt einzuhaltenden Spiels läßt sich daher dieser Bereich vom Ventilsitz bis zur Auslaufschräge 34 so gestalten, daß sowohl das Aufsetzen auf den Ventilsitz zur Dichtheit führt als auch im Gleitführungs und Endanschlußbereich

—die Hubbewegung des Hilfskörpers/Magnetankers 14 in Öffnungsrichtung praktisch geräuschlos zum Anschlag kommt,

—eine leichtgängige mechanische Führung in Achsrichtung auch bei starken Verunreinigungen des Mediums (Wasser und beispielsweise Gießereisand) gewährleistet ist, ohne daß entsprechend höhere Druckverluste entstehen und

—die magnetischen Verluste zwischen dem Schließkörper/Magnetanker 14 und dem linksseitigen Jochstück 19 so klein wie möglich sind.

Dabei kann vorzugsweise in den Spulenkörper angrenzend an den Führungsrohrbereich 33 ein Magnetisch leitendes Rohrstück noch eingebettet sein; dieses Rohrstück ist in Fig. 1 bei 36 angedeutet und bildet eine Verlängerung des Jochstücks 19, so daß es dazu beiträgt, die Übertragung des magnetischen Flusses auf der gesamten Flügellänge sicherzustellen. Hierdurch ergibt sich insgesamt eine geringere Induktion und das System wird verlustärmer.

Vom magnetischen Standpunkt ist eine Ausgestaltung zu bevorzugen, die in der Querschnittdarstellung der Fig. 7 gezeigt ist und die darin besteht, daß die Flügel 30' an ihren äußeren Endbereichen effektiv in eine Zylinderform übergehen, die die Länge der Flügel haben kann und in Fig. 7 bei 37 dargestellt ist. Zwischen diesem magnetisch leitenden Rohr 37 und dem Jochteil 19 bzw. dem magnetisch leitenden Rohrstück 36 ergibt sich dann ein großflächiger und daher entsprechend verlustarmer Luftspalt. Da hier andererseits aber technologische und insbesondere auch strömungstechnische Gesichtspunkte zu berücksichtigen sind, insbesondere auch Verunreinigungen, wird der freie Flügelendbereich, wie ihn der Querschnitt der Fig. 5 zeigt, bevorzugt.

Dieser Darstellung der Fig. 5 kann auch entnommen werden, daß sich der Anker normalerweise auf zwei Flügel im Führungsrohr seitlich abstützt, daher auf der gegenüberliegenden Seite zwischen den Flügelrändern und dem Führungsrohr zusätzliche Abstände a entstehen. Dieser Abstand a ist maßgebend für die Exzentrizität des Ankers, den Ungleichmäßigkeiten des Magnetflusses am Flügelrand bzw. unter Umständen einer Undichtigkeit im Sitzbereich aufgrund eines exzentrischen Aufsetzens des Kegels auf den Ventilsitz. Es wird daher angestrebt, den Abstand a möglichst gering zu halten, wobei zu berücksichtigen ist, daß in diesem Bereich eine Verklemmung des Schließkörpers/Magnetankers 14 durch Verunreinigungen (Sandkörner) zustande kommen kann. Eine Reduzierung des Abstands a unter eine gegebene Sandkorngröße ist jedoch ohne Blockierungsgefahr möglich, wenn man, wie weiter vorn schon erwähnt, das Flügelprofil dachförmig abbildet.

Der Darstellung der Fig. 1 kann entnommen werden, daß die auf die Spule 18 gerichtete Innenwand des Spulenkörpers 17 in diesem Bereich aus der rohrartigen Verlängerung des Jochstücks 19 besteht, die daher außen mit einer Isolationsschicht 38 (z.B. Pulverlack) beschichtet ist. Ferner befindet sich zwischen der magnetischen Rohrform oder Verlängerung des Jochs 19 bzw. des ergänzenden magnetisch leitenden Rohrstücks 36 und dem Schließkörper/Magnetanker 14 bzw. dessen Flügelenden eine nichtmagnetische (Kunststoff)-Schicht von vorgegebener Stärker b (vorzugsweise zwischen 0,4 bis 0,5 mm), wodurch ein metallischer Kontakt zwischen dem magnetischen Führungsrohr einerseits und dem Anker andererseits vermieden ist. Ein solcher metallischer Kontakt, der über Kontaktpunkte stattfindet, die dann gleichzeitig Sättigungszonen des magnetischen Kreises sind, könnte ungünstige Reibungsverhältnisse, einen Verschleiß und eine Geräuschbildung zur Folge haben. Da diese zusätzliche Schicht, die in den Fig. 5 und 7 mit 39 bezeichnet ist aber einen zusätzlichen Luftspalt bildet, ist ihre Stärke möglichst gering zu halten.

Vorteilhafte Ausgestaltungen der Erfindung sind in Fig. 4 gezeigt, und zwar ist eine erste Variante I oberhalb der Mittelachse und eine zweite Variante II unterhalb der Mittelachse angegeben.

Bei der Variante I ist das Einlaufstück 12' mit an ihm angeordneter Sitzdichtung 26' getrennt ausgebildet zu den übrigen Komponenten und wird in die Rohröffnung des Spulenkörpers 17' eingeschoben. Seinen Zusammenhalt erhält das Ganze dann durch den Gehäusemantel 13'. Das Einlaufstück 12' besteht aus einem geeigneten metallischen Werkstoff entsprechender magnetischer Permeabilität; der magnetische Rückschluß erfolgt über den Gehäusemantel 13' und das Joch 19' von allgemeiner Rohrform mit nach außen weisendem Ringflansch 19a', der an den Gehäusemantel 13' grenzt.

Die Sitzdichtung 26' ist auf das Einlaufstück 12' aufvulkanisiert, wobei die Nahtstellen (Übergangsstellen) Elastomer- bzw. Gummi-Metall von der Sitzkontaktstelle hinreichend entfernt sein sollen, um an den Nahtstellen möglichst wenig Spannungen entstehen zu lassen.

Bei der Variante I ist dann das Auslaufstück 11', wie generell schon in Fig. 1 erläutert, ein tragendes Kunststoff-Formteil mit eingelagertem Joch 19', wobei dieses Kunststoff-Formteil auch den Spulenkörper 17' mitbildet.

Im Gegensatz hierzu ist bei der Variante II das Einlaufstück 12'' das stärker tragende Element und trägt eingelagert und mit 19'' bezeichnete Jochteile und bildet gleichzeitig die Spulenkörperform zur Aufnahme der elektrischen Spule. Bei der Variante II kann es vorteilhaft sein, die elastomere Dichtung im Sitzbereich auf den Schließkörper/Magnetanker 14 anzuordnen, beispielsweise aufzuvulkanisieren, wie dies bei 40 angedeutet ist. Dies kann dann vorteilhaft sein, wenn eine Gewichtsreduzierung des Schließkörpers/Magnetankers 14 von Bedeutung ist, beispielsweise bei Einsatz des erfindungsgemäßen Ventils als Rückschlagventil, am den Öffnungsdruck zu reduzieren. Diese Variante II kann man auch so sehen, daß der Spulenkörper aus metallischen Joch-Formteilen besteht, die mit einer entsprechenden Kunststoffschicht umspritzt sind. Diese Kunststoffschicht ist im Polbereich des Einlaufstücks 12'' möglichst dünn gehalten und setzt sich in den Bereich des Einlaufstutzens fort; hierdurch ergibt sich eine gute Verankerung und Versteifung insbesondere im Bereich des Wickelkörpers durch Durchbrechungen 41.

Der Gehäusemantel 13' sorgt insgesamt für die endgültige Zug- und Verbindungsfestigkeit des Ventils und bildet eine Art Kraftbrücke, die die beiden Teile Einlaufstück und Auslaufstück zusammenhält.

Bei Erregung der Spule 18 wird der Schließkörper/Magnetanker 14 (vergl. Fig. 1) zum Einlaufstück hin kraftvoll angezogen und übt dann Dichtfunktionen im dauererregten Zustand der Spule 18 aus.

Andererseits kann diese Dichtfunktion auch stromlos bei dann umgekehrter Strömungsrichtung erfolgen (Rückschlagventil). Bei einer solchen Anwendungsart empfiehlt es sich, das Ventil so senkrecht zu montieren, daß das Einlaufstück unten ist.

Sobald die Spule 18 stromlos wird, geht der Schließkörper/Magnetanker 14 in die in Fig. 1 gestrichelte Position auf Anschlag an der Schrägfläche 34 zurück, wodurch eine weitgehend druckverlustfreie Strömung um diesen herum stattfindet.

## Patentansprüche

1. Magnetventil zum Steuern von Gasen oder Flüssigkeiten, insbesondere 2/2-Wege-Magnetventil in einer Heizeinrichtung etwa für den Fahrgastraum eines Fahrzeugs mit einer Wärmequelle, wie ein flüssigkeitsgekühlter Verbrennungsmotor o. dgl., mit einem Einlaufstutzen, einem Auslaufstutzen, einem Ventilsitz und einem Schließkörper, der sich bei Erregung einer Spule aufgrund des hierdurch erzeugten Magnetfeldes bewegt, wobei der Strömungsweg des zu steuernden Mediums innerhalb der Magnetspule (18) verläuft und das Magnetventil im wesentlichen zur Strömungsachse konzentrisch aufgebaut ist, während der Schließkörper gleichzeitig den Magnetanker (14) bildet und in einem Führungsrohr (13), welches Teil des Spulenkörpers (17) ist, gleitverschließlich gelagert ist, dadurch gekennzeichnet, daß der Schließkörper/Magnetanker (14) sich von der ventilsitzbildenden Ringfläche in Strömungsrichtung zunehmend stromlinienförmig verjüngt und entgegen der Strömungsrichtung bei Erregung der Magnetspule in seine Schließstellung gelangt, wobei er allein von Druck- oder Strömungskräften in seine Offenstellung bewegt wird.

2. Magnetventil nach Anspruch 1, dadurch gekennzeichnet, daß in dem Spulenkörper (17) im Bereich des Führungsrohres (33) zur Schließung des magnetischen Kreises ein Magnetjoch (19) und/oder ein magnetisches Rohr (36) eingelagert sind.

3. Magnetventil nach Anspruch 1 oder 2, dadurch gekennzeichnet, daß der Schließkörper-Magnetanker (14) entgegen der Strömungsrichtung eine vordere Spitze bildet, die konkav in eine nach innen gebogene Ringfläche (Bereich 4—5) übergeht, an welche sich ein geradliniger Schrägbereich (5—6) als Ringfläche anschließt, von welchem ausgehend der Schließkörper/Magnetanker (14) sich tropfenförmig verjüngend in einer rückwärtigen Spitze endet (Figur 2).

4. Magnetventil nach einem der Ansprüche 1 bis 3, dadurch gekennzeichnet, daß der Schließkörper/Magnetanker (14) kurz hinter dem von einer geradlinigen Schräge gebildeten Ringfläche (Bereich 5—6) ansetzend rotationssymmetrisch vom Hauptkörper abstehende (einstückige) Flügel (30) aufweist, die zur Gleitführung und gleichzeitig zur Sicherung des magnetischen Flußübergangs der zylindrischen Form des Führungsrohres folgen.

5. Magnetventil nach Anspruch 4, dadurch gekennzeichnet, daß die Flügel (30) mit einer vorderen Schräge (S), der Strömungsrichtung folgend, geneigt beginnen und am Ende des Schließkörpers/Magnetankers (14) eine weitere Schräge (31) aufweisen, die eine sich in gleicher Weise verjüngenden Schrägfläche (34) als Endstück des Führungsrohrs (33) zur Hubbegrenzung entspricht.

6. Magnetventil nach Anspruch 4 oder 5, dadurch gekennzeichnet, daß jeder Flügel angrenzend zum Führungsrohr (33) dachkantenförmig ausgebildet ist, wobei die Spitze zum Führungsrohr weist.

7. Magnetventil nach einem der Ansprüche 4 bis 6, dadurch gekennzeichnet, daß die Flügel an ihren äußeren Endbereichen unter Freilassung von hierdurch gebildeten Durchströmungsöffnungen in eine äußere Rohrringform übergehen, die der Innenform des Führungsrohrs (33) entspricht.

8. Magnetventil nach einem der Ansprüche 1 bis 7, dadurch gekennzeichnet, daß der Schließkörper/Magnetanker (14) im Führungsrohr (33) lose und mit vorgegebenem Abstand der Flügelenden gelagert ist, wobei der Hub des Schließkörpers/Magnetankers durch eine vordere Sitzanlage und durch den Anschlag der hinteren Flügelschrägflächen (31) an die schräge Führungsrohr-Ringfläche (34) begrenzt ist.

9. Magnetventil nach einem der Ansprüche 1 bis 8, dadurch gekennzeichnet, daß der Spulenkörper (17), das Führungsrohr (33), der Auslaufstutzen (16) und das Joch (19) Bestandteile eines in Strömungsrichtung gesehen hinteren Auslaufteils (11) sind, wobei das Joch (19) als Rohrteil mit einem einer Spulenkörperringwandung folgenden Ringflansch (19a') von dem Material des Auslaufkanals (11) umspritzt ist und ein separates, den Ventilsitz (26) bildendes Einlaufteil (12, 12') in die Spulenkörperöffnung eingeschoben ist, wobei das Einlaufteil (12) aus magnetisch leitendem Material besteht oder entsprechende, den magnetischen Kreis schließende Metallteile eingelagert hat (Figur 1).

10. Magnetventil nach Anspruch 9, dadurch gekennzeichnet, daß das Joch (19) eine in Strömungsrichtung gesehen hintere Verlängerung aufweist zur Verbesserung der magnetischen Leitfähigkeit im Bereich der Schließkörper/Flügel (30) oder daß ein zusätzliches magnetisches, die Jochwirkung nach hinten in den Flügelbereich übernehmendes Rohrstück (36) vorgesehen ist.

11. Magnetventil nach einem der Ansprüche 1 bis 10, dadurch gekennzeichnet, daß der vordere, sich verjüngende Endbereich (35) des Einlaufstücks (12) eine elastomere Dichtung aufweist.

12. Magnetventil nach Anspruch 11, dadurch gekennzeichnet, daß die elastomere Dichtung (26) anvulkanisiert ist und vom Ende des Verjüngungsbereichs ausgehend eine nach innen gekrümmte, konkave Ringfläche (Bereich 1—2—3) bildet, die in den zylindrischen Führungsrohrbereich übergeht.

13. Magnetventil nach einem der Ansprüche 1 bis 12, dadurch gekennzeichnet, daß der Spulenkörper mit zylindrischer Innenwandung und seitlichen Stirnringwänden als metallisches Joch (19'') ausgebildet und vom Material des Einlaufstücks (12) umspritzt ist und das Auslaufstück (11'') mit Auslaufstutzen auf das Einlaufstück (12'') mit seinen Teilkomponenten aufgespritzt ist (Figur 4—Variante 11).

14. Magnetventil nach einem der Ansprüche 1 bis 13, dadurch gekennzeichnet, daß ein äußerer, die Spule (18) mindestens teilweise abdeckender und den magnetischen Rückschluß vervollständigender Gehäusemantel (13, 13') vorgesehen ist, der beidseitig die jeweiligen, vom Einlaufstück und/oder vom Auslaufstück ausgehenden, den Spulenkörper vervollständigenden Ringflansche umfaßt, vorzugsweise an diese angebördelt ist.

15. Magnetventil nach Anspruch 13, dadurch gekennzeichnet, daß bei Ausbildung des Einlaufstücks (12'') aus eingelagerte Jochteile (19'') enthaltendem Kunststoff der elastomere Dichtungsbereich an der Sitzstelle durch eine elastomere oder gummiartige Beschichtung des Schließkörpers/Magnetankers (14) gebildet ist.

16. Magnetventil nach einem der Ansprüche 1 bis 15, dadurch gekennzeichnet, daß das vom Joch (19) gebildete Führungsrohr (33) mit einer inneren Kunststoffschicht (39) beschichtet ist.

17. Magnetventil nach einem der Ansprüche 1 bis 16, dadurch gekennzeichnet, daß die sich gegenüberliegenden Ringbereiche (1—2; 5—6) der sitzbildenden Bereiche vom Schließkörper/Magnetanker (14) bzw. Führungsrohr (33) als sich anziehende Pole eines magnetischen Luftspaltes ausgebildet sind.

**Revendications**

1. Soupape magnétique pour la commande de gaz ou de liquides, en particulier soupape magnétique à distributeur 2/2 voies dans une installation de chauffage pour l'habitacle d'un véhicule avec une source chaude, comme un moteur à combustion interne refroidi par un liquide ou analogues, soupape comprenant un ajutage d'entrée, un ajutage de sortie, un siège de soupape et un corps de fermeture, qui se déplace en raison du champ magnétique crée par l'excitation d'une bobine, la voie d'écoulement du liquide à commander passant à l'intérieur de la bobine magnétique (18) et la soupape magnétique étant construite essentiellement concentrique à l'axe d'écoulement, alors que le corps de fermeture constitue en même temps l'induit magnétique (14) et est logé mobile par glissement dans un tube du guidage (13), qui fait partie du corps de bobine (17), caractérisé en ce que le corps de fermeture/induit magnétique (14) se rétrécit à partir de la surface annulaire constituant le siège de soupape dans le sens de l'écoulement, en prenant un profil progressivement effilé et arrive dans sa position de fermeture à contre-courant par excitation de la bobine magnétique, en n'étant par contre déplacé vers sa position d'ouverture que par les forces de pression ou du flux d'écoulement.

2. Soupape magnétique selon la revendication 1, caractérisé en ce que dans le corps de bobine (17) dans la zone du tube de guidage (33) sont logés, pour la fermeture du circuit magnétique, une culasse magnétique (19) et/ou un tube magnétique (36).

3. Soupape magnétique selon l'une ou l'autre des revendications 1 ou 2, caractérisée en ce que le corps de fermeture/induit magnétique (14) forme une pointe avant, opposée à la direction du courant, qui de façon concave se transforme en une surface annulaire (zone 4—5) courbée vers l'intérieur, à laquelle se raccorde une zone rectiligne inclinée (5—6) de surface annulaire, à la suite de laquelle le corps de fermeture/induit magnétique (14) se rétrécit en forme ovoïde et se termine par une pointe arrière (figure 2).

4. Soupape magnétique selon l'une quelconque des revendications 1 à 3, caractérisée en ce que le corps de fermeture/induit magnétique (14) présente peu après la surface annulaire (zone 5—6) formée par une partie inclinée rectiligne, des ailettes (30) disposées en symétrie de rotation, faisant saillie à partir du bloc principal (en une seule pièce avec lui), et qui suivent la forme cylindrique du tube de guidage pour un guidage par glissement et en même temps pour assurer le passage du flux magnétique.

5. Soupape magnétique selon la revendication 4, caractérisée en ce que les ailettes (30) débutant inclinées avec un déclivité (S), en suivant le sens d'écoulement, et à l'extrémité du corps de fermeture/induit magnétique (14) présentent une autre inclinaison (31) qui correspond à une surface annulaire inclinée (34) s'amincissant de la même façon que la partie terminale du tube de guidage (33), destinée à limiter la course.

6. Soupape magnétique selon l'une ou l'autre des revendications 4 ou 5, caractérisée en ce que chaque ailette avoisinant le tube de guidage (33) est réalisée en forme d'arête de toit, la pointe se trouvant vers le tube de guidage.

7. Soupape magnétique selon l'une quelconque des revendications 4 à 6, caractérisée en ce que les ailettes tout en laissant libre les ouvertures de passage de flux formées de cette façon, se transforment à leurs extrémités extérieures en un tube de forme annulaire, qui correspond à la forme intérieure du tube de guidage (33).

8. Soupape magnétique selon l'une quelconque des revendication 1 à 7, caractérisée en ce que le corps de fermeture/induit magnétique 14 est logé relaché dans le tube de guidage (33) et avec un intervalle prédéterminé des extrémités d'aillettes, la course du corps de fermeture/induit magnétique est limitée en avant par la position du siège et par la butée des surfaces arrière inclinées des ailettes (31) contre la surface annulaire inclinée du tube de guidage (34).

9. Soupape magnétique selon une des revendications 1 à 8, caractérisé en ce que le corps de bobine (17), le tube de guidage (33), l'ajutage d'entrée (16) et la culasse (19) sont des parties constituantes d'une pièce de sortie arrière (11) vue dans le sens d'écoulement; la culasse (19) comme partie du tube avec une collerette annulaire (19a') faisant suite à une paroi annulaire du corps de bobine est encastrée par extrusion par le matériau du canal de sortie (11) et une pièce d'entrée séparée formant le siège de soupape (26) est introduite par glissement dans l'ouverture du corps de bobine, la pièce d'entrée (12) se composant de matériau conducteur magnétique ou ayant emmagasiné des pièces métalliques appropriées fermant le circuit magnétique (figure 1).

10. Soupape magnétique selon la revendication 9, caractérisée en ce que, la culasse (19) comprend un prolongement arrière, vu dans le sens de l'écoulement, pour l'amélioration de la conductibilité magnétique dans la zone du corps de fermeture/ailettes (30) ou en ce que il est prévu un tronçon de tube (36) additionnel relayant l'effet magnétique de la culasse vers l'arrière dans la zone des ailettes.

11. Soupape magnétique selon l'une quelconque des revendications 1 à 10 caractérisée en ce que, la zone terminale (35) de la pièce d'entrée (12) s'amincissant vers l'avant, comprend une garniture d'étanchéité en élastomère.

12. Soupape magnétique selon la revendication 11, caractérisée en ce que la garniture d'étanchéité (26) en élastomère est prévulcanisée et forme, à partir de la fin de la zone de rétrécissement, une surface annulaire concave courbée vers l'intérieur (zone 1—2—3), qui aboutit dans la zone du tube de guidage cylindrique.

13. Soupape magnétique selon l'une quelconque des revendications 1 à 12, caractérisée en ce que le corps de bobine avec sa paroi intérieure cylindrique et ses parois frontales latérale annulaires est réalisé sous forme d'une culasse métallique (19'') et est recouverte par le matériau constituant la pièce d'entrée (12) et la pièce de sortie (11'') avec ajutage de sortie est appliquée sur la pièce d'entrée (12'') avec ses composants (variante II de la figure 4).

14. Soupape magnétique selon une quelconque des revendications 1 à 13, caractérisée en ce qu'est prévue une enveloppe de carter (13, 13') extérieure, couvrant au moins partiellement la bobine (18) et complétant la fermeture magnétique en retour, cette enveloppe entoure de chaque côté des collerettes annulaires complétant le corps de bobine et provenant respectivement de la pièce d'entrée et/ou de la pièce de sortie et de préférence brident les bords de ces collerettes.

15. Soupape magnétique selon la revendication 13, caractérisée en ce que pour la réalisation de la pièce d'entrée (12'') en matière plastique contenant des parties de culasse (19'') logées à l'intérieur, la zone d'étanchéité en élastomère est formée à l'endroit du siège par un revêtement du corps de fermeture/induit magnétique (14) du type élastomère ou caoutchouc.

16. Soupape magnétique selon l'une quelconque des revendications 1 à 15, caractérisée par le fait que le tube de guidage (33) formé par la culasse (19) est recouvert intérieurement d'une couche de matière plastique (39).

17. Soupape magnétique selon l'une quelconque des revendications 1 à 16, caractérisée en ce que les zones annulaires situées en face l'une de l'autre (1, 2; 5, 6) des domaines constituant le siège du corps de fermeture/induit magnétique (14) ou du tube de guidage (33) sont réalisées comme pôles d'attraction d'un entrefer magnétique.

## Claims

1. Solenoid valve for controlling gases or liquids, in particular 2/2-way solenoid valve in a heating device, for example for the passenger compartment of a vehicle, having a heat source, such as a liquid-cooled internal combustion engine or the like, having an inlet connection, an outlet connection, a valve seat and a closing element which, upon excitation of a coil, moves by reason of the magnetic field produced thereby, the flow path of the medium to be controlled running within the magnet coil (18) and the solenoid valve being constructed essentially concentrically to the axis of flow, while the closing element simultaneously forms the magnet armature (14) and is mounted to be slideably displaceable in a guide tube (13) which is part of the coil form (17), characterized in that, in the direction of flow, the closing element/magnet armature (14) tapers progressively in streamline shape away from the valve-seat-forming annular surface and moves into its closing position against the direction of flow when the magnet coil is excited, being moved into its open position solely by flow-produced or pressure forces.

2. Solenoid valve according to Claim 1, characterized in that a magnet yoke (19) and/or a magnetic tube (36) are embedded in the coil form (17) in the region of the guide tube (33) in order to close the magnetic circuit.

3. Solenoid valve according to Claim 1 or 2, characterized in that, counter to the directions of flow, the closing element/magnet armature (14) forms a forward tip which merges concavely into a inward-curved annular surface (region 4—5), adjoining which is a rectilinear sloping region (5—6) in the form of an annular surface, starting from which the closing element/magnet armature (14) tapers in a tear shape to end in a rearward tip (Figure 2).

4. Solenoid valve according to one of Claims 1 to 3, characterized in that, starting a short distance downstream of the annular surface (region 5—6) formed by a rectilinear slope, the closing element/magnet armature (14) has (integral) vanes (30) which protrude in rotationally symmetrical fashion from the main body and, for the sliding guidance and simultaneously for ensuring the magnetic flux transfer, follow the cylindrical shape of the guide tube.

5. Solenoid valve according to Claim 4, characterized in that, following the direction of flow, the vanes (30) begin obliquely with a slope (S) at the front and, at the end of the closing element/ magnet armature (14), have a further slope (31) which corresponds to an oblique surface (34), tapering in the same way, as end piece of the guide tube (33) for the purpose of stroke limitation.

6. Solenoid valve according to Claim 4 or 5 characterized in that, adjacent to the guide tube (33), each vane is of roof-ridge-shaped design, the tip pointing towards the guide tube.

7. Solenoid valve according to one of Claims 4 to 6, characterized in that, at their outer end region, leaving through flow openings formed thereby, the vanes change to an outer tubular ring shape which corresponds to the internal shape of the guide tube (33).

8. Solenoid valve according to one of Claims 1 to 7, characterized in that the closing element/ magnet armature (14) is mounted loosely in the guide tube (33) and with a predetermined clearance of the vane ends, the stroke of the closing element/magnet armature being limited by forward abutment on the seat and by the striking of the rearward oblique vane surfaces (31) against the sloping annular guide-tube surface (34).

9. Solenoid valve according to one of Claims 1 to 8, characterized in that the coil form (17), the guide tube (33), the outlet connection (16) and the yoke (19) are parts of a rearward outlet part (11) (as seen in the direction of flow), the material of the outlet channel (11) being moulded around the yoke (19), which is in the form of a tubular part having an annular flange (19a') following an annular coil-form wall, and a separate inlet part (12, 12') forming the valve seat (26) is pushed into the coil-form opening, the inlet part (12) consisting of magnetically conductive material or having embedded in it corresponding metal parts closing the magnetic circuit (Figure 1).

10. Solenoid valve according to Claim 9, characterized in that the yoke (19) has a rearward prolongation (as seen in the direction of flow) to improve the magnetic conductivity in the region of the closing elements/vanes (30) or in that an additional tube piece (36) taking the effect of the yoke rearwards into the region of the vanes is provided.

11. Solenoid valve according to one of Claims 1 to 10, characterized in that the forward, tapering end region (35) of the inlet piece (12) has an elastomeric seal.

12. Solenoid valve according to Claim 11, characterized in that the elastomeric seal (26) is moulded on and, starting from the end of the tapered region, forms an inward-curved, concave annular surface (region 1—2—3) which merges into the cylindrical guide-tube region.

13. Solenoid valve according to one of Claims 1 to 12, characterized in that the coil form is designed with a cylindrical inner wall and lateral annular end walls as a metallic yoke (19'') and the material of the inlet piece (12) is moulded around it and the outlet piece (11''), with outlet connection, is moulded onto the inlet piece (12'') with its component parts (Figure 4—Variant II).

14. Solenoid valve according to one of Claims 1 to 13, characterized in that an outer housing shell (13, 13') which at least partially covers the coil (18) and completes the magnetic return path is provided which grips on both sides the respective annular flanges starting from the inlet piece and/ or from the outlet piece and completing the coil form, and is preferably flanged to said annular flanges.

15. Solenoid valve according to Claim 13, characterized in that, where the inlet piece (12'') is formed from plastic containing embedded yoke parts (19''), the elastomeric seal region at the location of the seat is formed by an elastomeric or rubber-like coating of the closing element/magnet armature (14).

16. Solenoid valve according to one of Claims 1 to 15, characterized in that the guide tube (33) formed by the yoke (19) is coated with an inner plastics layer (39).

17. Solenoid valve according to one of Claims 1 to 16, characterized in that the mutually opposite annular regions (1—2; 5—6) of the seat-forming regions of the closing element/magnet armature (14) and of the guide tube (33) respectively are designed as mutually attracting poles of a magnetic air gap.

FIG.1

EP 0 312 527 B1

# FIG.2

# FIG.3

EP 0 312 527 B1

## FIG.4

## FIG.7

3

# FIG.5

# FIG.6